Europäisches Patentamt

**European Patent Office**

**Office européen des brevets**

(11) Publication number: **0 443 692 A2**

# EUROPEAN PATENT APPLICATION

(21) Application number: **91200385.2**

(51) Int. Cl.⁵: **C08B 30/04**

(22) Date of filing: **22.02.91**

(30) Priority: **23.02.90 NL 9000447**

(43) Date of publication of application:
**28.08.91 Bulletin 91/35**

(84) Designated Contracting States:
**AT BE CH DE DK ES FR GB GR IT LI LU NL SE**

(71) Applicant: **NIVOBA ENGINEERING B.V.**
**No. 1, Industrieweg**
**NL-9641 HM Veendam(NL)**

(72) Inventor: **Holthuis, Herman**
**No. 42, Marktstraat**
**NL-9641 EL Veendam(NL)**

(74) Representative: **'t Jong, Bastiaan Jacobus et al**
**OCTROOIBUREAU ARNOLD & SIEDSMA**
**Sweelinckplein 1**
**NL-2517 GK 's-Gravenhage(NL)**

(54) **Method and device for obtaining starch and vegetable water from root crops.**

(57) Method for obtaining starch and vegetable water from root crops, comprising of grinding or shredding the crops and separating the starch and vegetable water thereby released. Separation takes place in at least three separation stages, namely a first stage to which the ground crops are supplied and fibers and vegetable water are discharged on the one hand and a suspension of starch in substantially vegetable water on the other, a second stage to which are fed the suspension separated in the first stage and a portion of the discharge washing liquid from a third stage, to which third stage are further added a starch suspension coming from the second stage and clean water and wherein the second stage is a displacement stage in which the vegetable water in the added suspension is substantially displaced by discharge washing liquid from the third stage.

FIG.1

The invention relates to a method for obtaining starch and vegetable water from root crops. Root crops are crops such as potatoes, manioc, batata, carrots and the like.

In order to obtain starch from these crops it is known to grind or shred them so that the vegetable water and the starch contained in the cells can be released. Using a separating process this starch and vegetable water are then separated.

Such a method and device are known from the Dutch patent 157 350. Herein the ground root crops are fed into a first multi-hydrocyclone system wherein a separation occurs between fibers and vegetable water on the one hand and a suspension of starch in substantially vegetable water on the other. From this suspension a further quantity of vegetable water is extracted in a concentrator such as a vacuum filter or centrifuge. The thickened suspension is subsequently treated in a second multi-hydrocyclone system. For this purpose the thickened suspension is first diluted with discharged washing liquid from the multi-hydrocyclone stage.

With this known device the starch can be obtained in a well purified condition. In practice the vegetable water becomes available in a 30 to 40% diluted form. Present in the vegetable water are per se valuable proteins, amino acids, sugars, salts etc. in dissolved state. Due to the considerable dilution of the vegetable water obtaining these substances is not economically feasible, or hardly so. Discharge is however also expensive by reason of pollution tax. Considerably diluting the vegetable water therefore results on the one hand in higher costs for an eventual subsequent treatment process and on the other in higher costs due to the discharge of a larger volume thereof.

The invention now has for its object to provide a method of the present type which functions with a better economic return.

According to the invention this is achieved with the method specified in claim 1. In the second stage where the vegetable water is substantially displaced by a portion of the discharge washing liquid of the third stage the vegetable water still remaining after the first stage can be recovered in very large part using only a moderate dilution. The vegetable water is released from the total process at a dilution in the order of only 5%. With such a dilution the vegetable water can easily be further processed for obtaining the substances contained therein and/or in the case of discharge the cost of pollution tax is relatively limited because of the relatively smaller volume.

The method according to the invention operates optimally when the step of claim 2 is applied.

A very favourable further development of the method according to the invention is characterized in claim 3. During performing of the method all material flows are hereby fixed. Centrifugal pumps with a fixed speed of revolution can therefore be used for the feed pumps of the (multi)hydrocyclones. These are relatively inexpensive so that the method can be carried out with a limited investment. A considerable advantage is herewith achieved compared to the prior art known from the Netherlands patent 157 350 since according to this known art all feed pumps have to be regulated centrifugal pumps or displacer pumps having an output dependent on the back pressure.

The invention also relates to and provides a device for obtaining starch and vegetable water from root crops. This device according to the invention comprises three separation stages of a number of cyclones or multi-cyclones connected in cascade and each supplied by a feed pump, with a washing liquid discharge connected in each case to the overflow of the functionally uppermost (multi)hydrocyclones, a suspension feed connected at an intermediate position, a suspension outlet connected to the drain of the functionally lowest (multi)cyclone and a washing liquid feed connected to the feed of the functionally lowest (multi)-cyclone, wherein the suspension outlets of the first and second stage are connected to the suspension feeds of the second and third stage respectively,

the washing liquid discharge of the third and second stage are connected to the washing liquid feed of the second and first stage respectively,

and wherein the washing liquid discharge of the third stage is connected to a discharge of excess liquid and the washing liquid feed of the first stage is connected via a liquid separator to the washing liquid discharge of the first stage. With this device the vegetable water is obtained from the washing liquid discharge of the first stage at a dilution in the order of only 5%. The starch is released as a suspension in clean water at the suspension outlet of the third stage. A portion of the washing liquid discharge of the third stage is discharged as excess water. This liquid is only slightly contaminated and can for instance be used for washing the raw material.

A very favourable embodiment of the device according to the invention is characterized in claim 7. Because the feed pumps of the (multi)hydrocyclones are centrifugal pumps driven at a constant speed of revolution, the investment costs for this device are comparatively limited.

With the step of claim 8 the material flows in the device are held even more accurately constant. The moisture content of the ground material supplied to the first stage can hereby be held precisely at a set value.

The feed pump is preferably a displacer pump. The constant material supply is hereby achieved in simple manner.

When the step of claim 10 is applied, it is achieved in favourable manner that the whole system is closed and remains free of air, whereby the separated vegetable water is likewise practically free of air and no problems can occur with respect to foam formation. Grinding of the raw material under vacuum is per se known from the European patent application 83 104185.

The invention will be further elucidated in the following description with reference to the embodiment shown in the figures.

Fig. 1 shows schematically the different phases and material flows.

Fig. 2 shows schematically an embodiment of the device according to the invention.

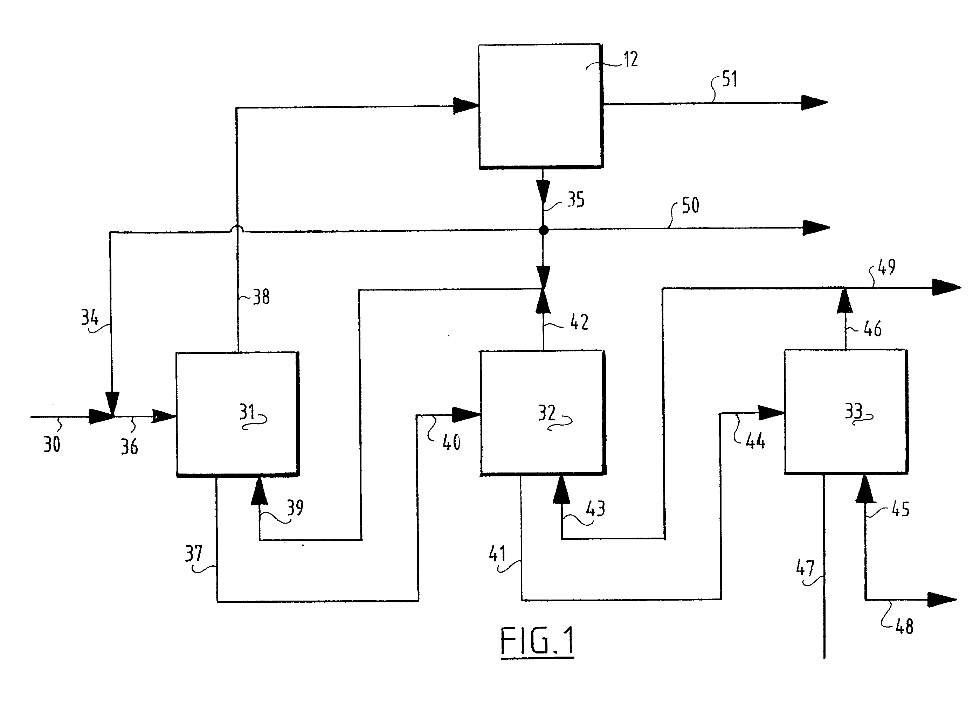

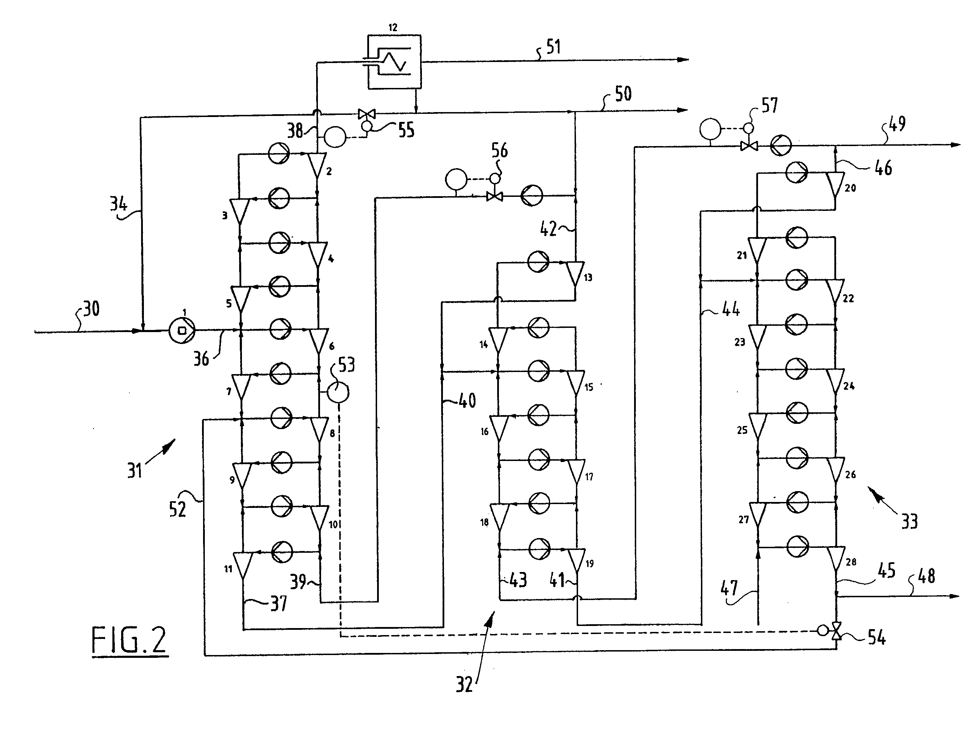

The same reference numerals are used in fig. 1 and 2 to designate corresponding components.

The first stage in the method for obtaining starch and vegetable water from root crops is for instance grinding the root crops, wherein at least 80% of the fibers in the ground material have a particle size of smaller than 0.4 mm. This ground material is fed in at 30, as seen in fig. 1. A suspension of starch in clean water obtained from the root crops is discharged at 48. The fibers still having a small quantity of starch and vegetable water are discharged at 51. Clean water is supplied at 47 and slightly contaminated waste liquid is indicated at 49.

The above specified separation takes place in substantially three separation stages 31, 32 and 33. At the first stage the ground material 30 is fed in at 36 together with a quantity of diluting liquid 34 formed by extracted vegetable water. Supplied at 39 to the first stage is washing liquid consisting of the washing liquid discharge 42 from the second stage 32, which is yet to be described, and vegetable water. At the washing agent discharge 38 the fibres and the vegetable water are discharged from the first stage. This mixture is fed to a decanter centrifuge 12 from which de-watered fibers 51 still having a small quantity of starch are released on one side and vegetable water on the other side at 35. Via the suspension outlet 37 of the first stage 31 a suspension of starch in vegetable water is discharged from the first stage 31.

This starch suspension is carried via the feed 40 into the second stage 32. Further supplied hereto at the washing liquid feed 43 is washing liquid consisting of washing liquid discharged from the third stage 33 at 46.

The second stage 32 is a displacement stage in which the vegetable water in the starch suspension fed in at 40 is substantially displaced by the discharge washing liquid of the third stage 33 fed in at 43. Discharged at 42 from the second stage 32 is liquid consisting of slightly diluted vegetable water. As noted earlier, this liquid, supplemented with vegetable water 35 from the de-watering installation 12, is fed as washing liquid to the first stage 31.

The starch suspension leaving the second stage 32 at 41 now contains only a small amount of dissolved constiuents. This suspension is fed to the third stage 33 at 44 where it is further cleaned. As noted, clean water is supplied at 47 to this third stage as washing liquid. At the suspension outlet 45 the supplied starch leaves the device suspended in clean water. The suspension liquid of the suspension fed in at 44 leaves the third stage 33 together with the excess washing liquid at the washing liquid discharge 46. This only slightly contaminated liquid is used as washing liquid in the second stage 32. Only the smallest possible amount hereof necessary for the good functioning of the second stage 32 is used. The excess of slightly contaminated liquid is discharged at 49 and can still be usefully employed for instance in washing the root crops before they are ground.

In one embodiment of the device, the first stage, which has fiber separation as its most important function, can comprise a sieving device. The second stage 32, in which the vegetable water in the supplied suspension is displaced, may comprise a filter device. The third stage 33, in which the starch is washed, may comprise separators and/or decanters. The de-watering in the device 12 can also be performed in different ways. For instance through sieving followed by compression, or using the above mentioned decanter centrifuge.

According to a preferred embodiment as shown in fig. 2, the three separation stages are formed by multi-hydrocyclone systems connected in cascade. The de-watering device 12 is a closed decanter centrifuge in this preferred embodiment. The grinding device (not further shown) is herein of the type that can grind the crops under pressure. The thus obtained preferred device is entirely closed and can therefore remain free of air, whereby eventual problems of foam formation are avoided.

In the preferred embodiment of fig. 2 the feed pumps of the multi-hydrocyclones are centrifugal pumps driven at a fixed speed of rotation. This is possible because all material flows in the system are fixed. This is achieved in that the feed pump 1 is a displacer pump and thus generates a constant rate of flow into the feed 36 for the first stage 31. A flow control valve 56 is further accommodated in the connecting conduit to the washing liquid feed 39 of the first stage 31 and ensures a constant flow rate. Connected to the overflow of the multi-hydrocyclone 8 is a density measuring device 53 which actuates a control valve 54 accommodated in a conduit 52 which can supply concentrated starch suspension from the suspension outlet 45 of the third stage to the feed of the hydrocyclone 8. The valve 54 is controlled such that the density of the overflow flow of cyclone 8 is held constant and thus the starch load in the system likewise remains constant. The flow rate of the washing water discharge 38 from the first stage 31 is held constant by controlling the amount of vegetable water added via conduit 34 to the mixture using the control valve 55. With the flow control valve 57 the quantity of washing liquid supplied to the second stage 32 is kept constant.

Simple centrifugal pumps with a fixed speed of revolution are comparatively inexpensive so that the total investment costs of the device are favourably influenced in this manner.

The embodiment of the method and device according to the invention is further elaborated hereinafter.

The device is designed to process 100 tons of potatoes per hour. These are ground to a condition wherein at least 80% of the fibers in the ground material have a particle size of smaller than 0.4 mm. The ground mixture contains 17,000 kg of starch of which 500 kg is bonded to 1300 kg of fiber. In addition, 81,700 kg of vegetable water containing proteins, amino acids, sugars, salts etc. in dissolved state is released during grinding.

The ratio of the overflow and drain fractions of the multi-hydrocyclones in the first stage 31 is as follows:

| multi-hydrocyclone | 2 | 1.8 |
|---|---|---|
| multi-hydrocyclone | 3 | 1.9 |
| multi-hydrocyclone | 4 | 2.0 |
| multi-hydrocyclone | 5 | 2.0 |
| multi-hydrocyclone | 6 | 2.0 |
| multi-hydrocyclone | 7 | 2.14 |
| multi-hydrocyclone | 8 | 1.14 |
| multi-hydrocyclone | 9 | 1.14 |
| multi-hydrocyclone | 10 | 1.14 |
| multi-hydrocyclone | 11 | 1.65 |

15,000 l of extracted vegetable water is added via 34. Via the washing liquid feed 39 is added 27 $m^3$ of diluted vegetable water from the washing liquid discharge 43 of the second stage plus 14 $m^3$ of virtually undiluted extracted vegetable water.

The overflow 38 of the first stage contains approximately 260 kg of free starch, 500 kg of bonded starch, 1300 kg of fiber and practically undiluted vegetable water.

At the suspension outlet 37 is released 16,240 kg of starch in 24.6 $m^3$ of slightly diluted vegetable water and this suspension is carried to the feed 40 of the second stage.

The ratio of overflow and drain fractions of the multi-hydrocyclones in the second stage is as follows:

| multi-hydrocyclone | 13 | 3.86 |
|---|---|---|
| multi-hydrocyclone | 14 | 4.25 |
| multi-hydrocyclone | 15 | 0.875 |
| multi-hydrocyclone | 16 | 0.976 |

4

| multi-hydrocyclone | 17 | 0.976 |
|---|---|---|
| multi-hydrocyclone | 18 | 0.976 |
| multi-hydrocyclone | 19 | 1.2 |

It is noted that the ratios given here are based on the liquid flows with solid material. Calculated for liquid flows without the solids the ratios amount respectively to

| multi-hydrocyclone | 13 | 4.4 |
|---|---|---|
| multi-hydrocyclone | 14 | 5.84 |
| multi-hydrocyclone | 15 | 1.14 |
| multi-hydrocyclone | 16 | 1.32 |
| multi-hydrocyclone | 17 | 1.32 |
| multi-hydrocyclone | 18 | 1.32 |
| multi-hydrocyclone | 19 | 1.52 |

The washing effect of the second stage is then 8.8.

Via the liquid feed 43 is added 27 m$^3$ of liquid from the liquid discharge 46 of the third stage. This liquid is slightly contaminated. The starch suspension from the suspension outlet 41 has a starch concentration of approximately 470 g/l and is only lightly contaminated. This suspension is supplied to the feed 44 of the third stage.

The ratio of the overflow and drain fractions of the multi-hydrocyclones in the third stage is:

| multi-hydrocyclone | 20 | 4 |
|---|---|---|
| multi-hydrocyclone | 21 | 4 |
| multi-hydrocyclone | 22 | 1.38 |
| multi-hydrocyclone | 23 | 1.18 |
| multi-hydrocyclone | 24 | 1.18 |
| multi-hydrocyclone | 25 | 1.18 |
| multi-hydrocyclone | 26 | 1.18 |
| multi-hydrocyclone | 27 | 1.18 |
| multi-hydrocyclone | 28 | 1.7 |

At 47 is added 42.7 m$^3$ of clean washing water. The clean starch suspension leaves the drain 45 with a concentration of approximately 470 g/l. The protein content in this suspension is less than 0.05% on dry substance basis.

Of the washing liquid discharge 46 which amounts in total to 42.7 m$^3$, 27 m$^3$ is, as noted, used as washing liquid for the second stage. The remaining portion of 15.7 m$^3$ is excess liquid containing 1.4% of the dissolved substances in the potato.

In the embodiment described here 98.6% of the vegetable water is obtained at a dilution of only 5%. The waste water flow contains only 1.4% of the vegetable water. The water consumption is comparatively very small and amounts to only 427 litres per 1000 kg of potatoes.

## Claims

1. Method for obtaining starch and vegetable water from root crops, comprising of grinding or shredding the crops and separating the starch and vegetable water thereby released, wherein separation takes place in at least three separation stages, namely a first stage to which the ground crops are supplied and from which fibers and vegetable water are discharged on one hand and a suspension of starch in substantially vegetable water on the other, a second stage to which are fed the suspension separated in the first stage and a portion of the discharge washing liquid of a third stage, to which third stage are further added a starch suspension coming from the second stage and clean water and wherein the second stage is an displacement stage in which the vegetable water in the added suspension is substantially displaced by discharge washing liquid from the third stage.

2. Method as claimed in claim 1, wherein the root crops are ground to a condition wherein at least 80% of the fibers in the ground mixture have a particle size of smaller than 0.4 mm.

3. Method as claimed in claim 1 or 2, wherein for the first stage hydrocyclones or multi-hydrocyclones with feed pumps connected in cascade are chosen, separated vegetable water is added to the ground material such that constant flow rate of the supplied ground material is obtained, wherein in the first stage a density measurement of the starch suspension is performed continuously and starch suspension from a following stage is supplied such that the measured density is held constant and that a washing liquid is supplied at a constant flow rate.

4. Method as claimed in claim 3, wherein for the second stage hydrocyclones or multi-hydrocyclones connected in cascade are chosen, and the washing liquid fed at a constant rate to the first stage comprises overflow liquid from the second stage.

5. Method as claimed in claim 4, wherein the washing liquid fed to the first stage is a mixture of the overflow liquid from the second stage and separated vegetable water.

6. Device for obtaining starch and vegetable water from root crops comprising three separation stages of a number of cyclones or multi-cyclones connected in cascade and each supplied by a feed pump, with a washing liquid discharge connected in each case to the overflow of the functionally uppermost (multi)-hydrocyclones, a suspension feed connected at an intermediate position, a suspension outlet connected to the drain of the functionally lowest (multi)cyclone and a washing liquid feed connected to the feed of the functionally lowest (multi)cyclone,
wherein the suspension outlets of the first and second stage are connected to the suspension feeds of the second and third stage respectively,
the washing liquid discharges of the third and second stage are connected to the washing liquid feeds of the second and first stage respectively,
and wherein the washing liquid discharge of the third stage is connected to a discharge of excess liquid and the washing liquid feed of the first stage is connected via a liquid separator to the washing liquid discharge of the first stage.

7. Device as claimed in claim 6, wherein the outlet of a feed pump with constant output is connected to the suspension feed of the first stage, to the inlet of which pump are connected the discharge of a grinding device for root crops and a liquid discharge of the liquid separator, wherein in the connecting conduit between the washing liquid discharge of the second stage and the washing liquid feed of the first stage is accommodated a control valve holding the flow rate in this conduit constant,
and wherein connected to the feed of a (multi)hydrocyclone of the first stage lying functionally lower than the suspension feed is a connecting conduit to the suspension outlet of the third stage and a control valve is accommodated in this conduit, while connected to the first stage is a density measuring device which controls this control valve such that at the location of the density measuring device the density of the suspension remains constant and wherein the feed pumps of the (multi)hydrocyclones are centrifugal pumps driven at a constant speed of revolution.

8. Device as claimed in claim 7, wherein a control valve is accommodated in the connecting conduit of the liquid discharge of the liquid separator and the inlet of the feed pump, which valve controls the flow rate in this connecting conduit such that the flow in the washing liquid discharge of the first stage remains constant.

9. Device as claimed in claim 7 or 8, wherein the feed pump is a displacer pump.

10. Device as claimed in any of the foregoing claims 6-9, wherein the liquid separator is a decanter centrifuge of closed type and the grinding device is of a type which can grind the crops under vacuum.

FIG.1

EP 0 443 692 A2

FIG.2